(19) Europäisches Patentamt
European Patent Office
Office européen des brevets

(11) **EP 2 977 196 B1**

(12) **EUROPÄISCHE PATENTSCHRIFT**

(45) Veröffentlichungstag und Bekanntmachung des Hinweises auf die Patenterteilung:
**16.11.2022  Patentblatt 2022/46**

(21) Anmeldenummer: **15177634.1**

(22) Anmeldetag: **21.07.2015**

(51) Internationale Patentklassifikation (IPC):
**B23P 19/02** (2006.01)   **B30B 15/14** (2006.01)
**B30B 15/26** (2006.01)   **G01L 5/00** (2006.01)

(52) Gemeinsame Patentklassifikation (CPC):
**B30B 15/26; B30B 15/14; G01L 5/0076; B23P 19/02**

(54) **PRESSVERFAHREN MIT KOMPENSATION VON POSITIONIERFEHLERN BEI EINEM PRESSVORGANG UND PRESSE ZUR DURCHFÜHRUNG EINES SOLCHEN VERFAHRENS**

PRESSING METHOD WITH COMPENSATION OF POSITIONING ERRORS IN A PRESSING PROCESS AND PRESS FOR CARRYING OUT SUCH A METHOD

PROCEDE DE MOULAGE A COMPENSATION D'ERREURS DE POSITIONNEMENT LORS DU PROCESSUS DE MOULAGE ET PRESSE DESTINEE A EXECUTER UN TEL PROCEDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2014  DE 102014110507**

(43) Veröffentlichungstag der Anmeldung:
**27.01.2016  Patentblatt 2016/04**

(73) Patentinhaber: **IEF Werner GmbH**
**78120 Furtwangen (DE)**

(72) Erfinder:
• **Bär, Manfred**
**78147 Vöhrenbach (DE)**

• **Meyer, Andreas**
**78120 Furtwangen (DE)**

(74) Vertreter: **Westphal, Mussgnug & Partner Patentanwälte mbB**
**Am Riettor 5**
**78048 Villingen-Schwenningen (DE)**

(56) Entgegenhaltungen:

EP-A1- 1 005 950      EP-A2- 0 482 360
DE-A1- 19 705 462     JP-A- 2001 232 525
JP-A- 2011 230 245    SU-A1- 1 433 744
US-A- 5 123 165       US-A- 5 491 647
US-A- 5 813 263       US-A1- 2011 132 207
US-B1- 6 276 050

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Pressverfahren mit einer Kompensation von Positionierfehlern bei einem Pressvorgang und eine Presse zur Durchführung eines solchen Verfahrens.

Pressen und Pressvorgänge gehören zu den Grundwerkzeugen bzw. Grundprozessen industrieller Fertigung und finden deswegen seit vielen Jahrzehnten weite Verbreitung. Dennoch stellt es noch immer ein Problem dar, den beim Pressvorgang, insbesondere beim Aufpressen eines Bauteils, wie beispielsweise eines Pressrings, auf ein anderes Bauteil, wie beispielsweise eine Welle, zurückgelegten Pressweg des Pressrings reproduzierbar hochgenau bis in den Mikrometerbereich einzustellen, wie es beispielsweise nötig ist, um eine Hülse mit exakt definiertem Spiel mittels eines Pressrings auf einer Welle anzuordnen.

Die Ursache für dieses Problem liegt letztlich darin, dass die beim Pressvorgang auftretenden Presskräfte variieren, und zwar aus Gründen, die nicht oder nicht vollständig kontrollierbar sind. So tragen zur Variation der Presskräfte Bauteiltoleranzen und Oberflächenbeschaffenheit der individuellen Bauteile ebenso bei wie Prozessparameter, z.B. die Schmierung und die jeweilige Pressgeschwindigkeit, und Umgebungsparameter, wie Temperatur oder Feuchtigkeit.

Die Presskräfte beim Verpressen von Bauteilen miteinander rufen unterschiedliche Reaktionskräfte hervor, die sich auf die kraftübertragenden Bauteile der Presse in Gestalt einer kraftabhängigen, in der Regel elastischen und dem Hooke'schen Gesetz unterfallenden Deformation oder Einfederung auswirken und das Bauteil elastisch stauchen. Die Variation der Presskräfte, die z.B. durch die Bauteiltoleranzen einer Bauteilcharge hervorgerufen wird, führt dementsprechend zu unterschiedlich starken Deformationen bzw. Stauchungen und führt dadurch zu einer Ungenauigkeit im Pressweg und daraus resultierenden Positionierfehlern, die durch konstante Korrekturfaktoren nicht behoben werden können.

Aus der DE 197 05 462 A1 ist ein Pressverfahren für eine Presse mit einem Unterwerkzeug und einem durch einen Motor angetriebenen Pressstempel oder einer durch einen Motor angetriebenen Pinole bekannt, wobei die Presse ferner ein Positionsmesssystem für die direkte oder indirekte Messung des Position des Presstempels oder der Pinole und ein Kraftmesssystem für die Messung der von der Presse ausgeübten Kraft aufweist, wobei das Positionsmesssystem und das Kraftmesssystem in Signalkommunikation mit einer Steuerelektronik zum Ansteuern der Presse stehen mit den Schritten Einsetzen der zu verpressenden Bauteile in das Unterwerkzeug, Verpressen der zu verpressenden Bauteile und Entnehmen der zu verpressenden Bauteile bekannt, bei dem während des Verpressens der Bauteile die Aufnahme von Datenpunkten für ein Kraft-Weg-Diagramm sowie die jeweils eingesetzten Bauteile mittels des Positionssystems und des KraftMesssystems erfolgt, bei dem in Abhängigkeit von dem Verlauf der Presskraft über den Weg des Pressenstößels Parameter dynamisch angepasst werden, die einen erfolgreichen Verlauf und/oder Abschluss des Pressvorgangs anzeigen.

Aus der US 5,813,263 ist ein Biegeverfahren mit einer Presse bekannt, bei dem unter Verwendung eines Dehnmessstreifens, der am Zwischenteil des Pressengestells angeordnet ist, Materialeigenschaften des zu biegenden Materials ermittelt und zur Anpassung der Ansteuerung der Presse verwendet werden.

Aus der US 6,276,050 B1 ist ein Pressverfahren gemäss dem Oberbegriff des Anspruchs 1 bekannt.

Die Aufgabe der Erfindung besteht darin, ein Pressverfahren anzugeben, das solche Positionierfehler weitgehend zu kompensieren, zumindest aber erheblich zu reduzieren vermag und eine Presse zur Durchführung des Pressverfahrens bereitzustellen. Diese Aufgabe wird gelöst durch ein Pressverfahren mit den Merkmalen des Patentanspruchs 1 und eine Presse mit den Merkmalen des Patentanspruchs 9.

Das erfindungsgemäße Pressverfahren arbeitet mit einer Presse mit einem Unterwerkzeug und einem durch einen Motor angetriebenen Pressstempel oder einer durch einen Motor angetriebenen Pinole, die die Aufnahme für den Pressstempel bildet oder trägt. Dabei weist die Presse ferner die ein Positionsmesssystem für die direkte oder indirekte Messung der Position des Presstempels oder der Pinole und ein Kraftmesssystem für die Messung der von der Presse ausgeübten Kraft auf.

Das Positionsmesssystem, das insbesondere als ein am Stempel oder an der Pinole angeordnetes Maßband und einen an einer Seitenwand der Presse angeordneten Lesekopf dafür ausgebildet sein kann und das Kraftmesssystem, das insbesondere eine in das Fußteil der Presse integrierte Kraftmessdose sein kann, aber grundsätzlich auch z. B. durch eine elektronische Überwachung der Motorströme des den Pressstempel bzw. die Pinole bewegenden Motors realisiert sein könnte, stehen in Signalkommunikation mit einer Steuerelektronik zur Ansteuerung der Presse. Diese kann entweder in die Presse integriert sein, sie kann aber z.B. auch durch einen separaten Steuer-PC realisiert werden.

Wie bei Pressverfahren üblich, weist das Pressverfahren die Schritte Einsetzen der zu verpressenden Bauteile in das Unterwerkzeug, Verpressen der zu verpressenden Bauteile, und Entnehmen der verpressten Bauteile auf. Allgemein kann man sich das Verpressen der zu verpressenden Bauteile so verstellen, dass der Pressstempel bzw. die Pinole die eingesetzen Bauteile antastet und von diesem Ausgangspunkt aus einen bestimmten Weg in Pressrichtung verfahren wird.

Der Kerngedanke der Erfindung besteht nun darin, diesen Pressweg zu vereinheitlichen, um die Reproduzierbarkeit der Anordnung der Bauteile aneinander, insbesondere die Reproduzierbarkeit der damit erreichten Position eines Pressrings auf einer Welle, zu verbessern. Um dies zu ermöglichen sieht das erfindungsgemäße Verfahren vor, dass während des Verpressens der Bauteile die Aufnahme von Datenpunkten für ein Kraft-Weg-Diagramm für die jeweils eingesetzten Bauteile mittels des Positionsmesssystems und des Kraftmesssystems erfolgt, dass noch während des Verpressens der Bauteile, für die die Datenpunkte aufgenommen wurden, eine Auswertung der Datenpunkte erfolgt, um mindestens einen Korrekturwert für den Pressweg zu bestimmen, und dass noch während des Verpressens der Bauteile, für die die Datenpunkte aufgenommen wurden, eine Korrektur des Presswegs für diese Bauteile unter Verwendung mindestens eines so erhaltenen Korrekturwerts erfolgt.

Insbesondere impliziert die Bestimmung eines Korrekturwegs für den Pressweg, dass durch die Steuerelektronik ein Pressweg vorgegeben wird, der von ihr überwacht wird. Dies unterscheidet sich grundsätzlich von Pressverfahren, bei denen der Pressvorgang so lange weiter fortgesetzt wird, bis eine Grenzkraft erreicht oder überschritten wird, was beispielsweise beim Erreichen eines Anschlags oder beim Pressen auf Block ein übliches Kriterium für das Beenden des Pressvorgangs ist.

Grundsätzlich ist es wünschenswert, wenn die Kraft-Weg-Kurve für den Benutzer auf einem Display der Presse oder auf dem Bildschirm des Steuer-PC sichtbar gemacht wird, eine Auswertung der Kurve ist aber auch nur auf der Basis der gemessenen Daten möglich.

Wie weiter unten im Detail erläutert wird, können mittels des Kraft-Weg-Diagramms die Abweichungen zwischen der Bewegung des Stempels oder der Pinole einerseits und des zu verpressenden Bauteils bzw. Pressrings andererseits identifiziert und entsprechende individuelle Korrekturfaktoren für jede Bauteilpaarung, z.B. Pressring und Achse berechnet und unmittelbar angewendet werden.

Eine vorzunehmende Korrektur resultiert aus der Tatsache, dass zum Aufbau der Kraft, die dazu führt, dass sich das aufzupressende Bauteil bzw. der Pressring überhaupt in Bewegung setzt, bereits eine Verfahrung des Pressstempels bzw. der Pinole erfolgt. Erst wenn diese Losbrechkraft erreicht ist, beginnt sich das aufzupressende Bauteil überhaupt zu bewegen. Demzufolge umfasst erfindungsgemäß die Auswertung der Datenpunkte für das Kraft-Weg-Diagramm eine zumindest näherungsweise Ermittlung der Position, an der die Losbrechkraft erreicht wurde. Dies kann unter Verwendung von Datenpunkten des Kraft-Weg-Diagramms insbesondere auf zwei Arten realisiert werden, nämlich durch Auswertung des Kraftanstiegs zwischen jeweils benachbarten Messpunkten, der sein Vorzeichen wechselt, nachdem das Maximum überschritten wurde und/oder durch Bestimmung des Erreichens eines Maximums der Kraft durch Überprüfung, welches der gemessenen Datenpaare den höchsten Kraftwert aufweist.

Eine Möglichkeit dazu, diese Information zur Korrektur dieses Fehlers zu verwenden besteht darin, dass die Position, an der die Losbrechkraft erreicht wurde, als Anfangsposition des Pressweg, also als Startpunkt für die Messung bzw. Überwachung des zurückgelegten Presswegs durch die Steuerung verwendet wird. Dies setzt allerdings eine schnelle Erkennung des Maximums voraus und kann bei schnellen Pressprozessen problematisch sein.

Eine bevorzugte Korrekturmöglichkeit für diesen Fehler sieht daher vor, dass die Wegstrecke zwischen der Position, bei der der Pressstempel eines der Bauteile angetastet hat und der Position, an der die Losbrechkraft erreicht wurde, zum Pressweg für den laufenden Pressvorgang hinzugefügt wird, also die Endbedingung für die Bewegung der Pinole oder des Pressstempels, die von der Steuerung überwacht wird, beim laufenden Pressvorgang geändert wird.

Da, wie weiter unten beschrieben wird, aus dem Kraft-Weg-Diagramm noch andere Korrekturfaktoren ableitbar sind, stellen die beiden vorstehend beschriebenen, alternativ zueinander durchzuführenden Korrekturen in der Regel nur einen Teil der Gesamtkorrektur dar und werden mit weiteren Korrekturen für andere Effekte kombiniert.

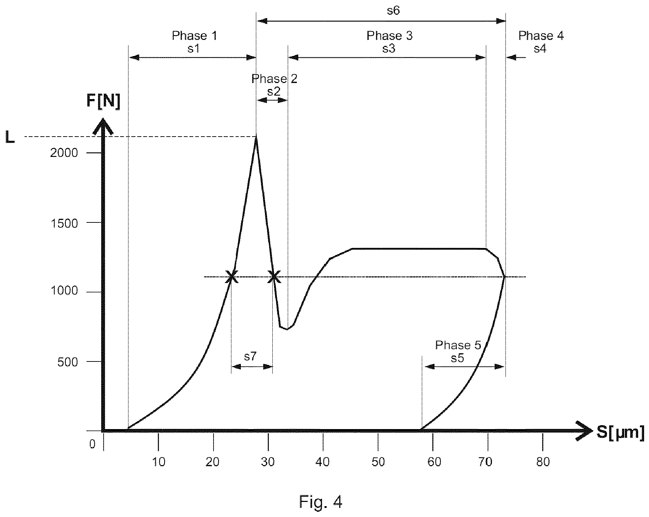

Insbesondere zeigt sich, wie weiter unten bei der Diskussion der Figur 4 genauer beschrieben wird, dass sich bis zum Losbrechen des aufzupressenden Bauteils eine elastische Deformation der Presse aufbaut, die in der Phase, in der das aufzupressende Bauteil vorgeschoben ist, teilweise abgebaut ist. Die korrespondiere Positionsänderung muss korrigiert werden. Um dies zu ermöglichen ist es zweckmäßig, dass das Verpressen der Bauteile in mindestens zwei Teilschritten erfolgt, also zunächst ein Teil des erwünschten Presswegs gepresst wird und dann ein zweiter Teil, nachdem zwischenzeitlich der Pressstempel zur Ruhe gekommen ist und das zu verpressende Bauteil sich gesetzt hat. Eine zwischenzeitliche Entnahme des teilverpressten Pressverbundes ist aber ebensowenig notwendig wie ein zurückfahren des Pressstempels und Entlasten des Pressverbundes, es liegen in diesem Sinne keine zwei Pressprozesse vor, sondern ein Pressprozess, in dessen Verlauf der Pressstempel bzw. die Pinole einmal zum Stillstand kommen und allenfalls noch optional soweit zurückgefahren werden, dass sie den Pressverbund entlasten. Wesentlich ist, dass sich das zu aufzupressende Bauteil einmal setzt und dann wieder losgebrochen wird, um sich am Ende des letzten Teilschritts des Pressprozesses erneut zu setzen.

Der Grund für die Bevorzugung einer solchen Aufteilung des Pressprozesses liegt darin, dass für die Fehlerkorrektur die Analyse eines von den aktuellen Umgebungsbedingungen und den Eigenschaften des jeweiligen Bauteilpaares, wie dessen tatsächlicher Dimensionierung innerhalb des von den Bauteiltoleranzen vorgegebenen Bereichs abhängigen Kraft-Weg-Diagramms notwendig ist. Ein erster Teilschritt kann daher genutzt werden, um ein solches Diagramm für die jeweilige Bauteilpaarung unter den aktuellen Umgebungsbedingungen zu bestimmen, daraus die Korrekturen abzuleiten und mit diesen den in einem folgenden Teilschritt zurückzulegenden Pressweg zu korrigieren.

Besonders bevorzugt ist es, wenn die Auswertung der Datenpunkte eine zumindest näherungsweise Bestimmung der Setzkraft erfolgt, da diese das Ausmaß des Rückfederns maßgeblich bestimmt.

Eine erste konkrete Möglichkeit dazu besteht darin, dass die Auswertung der Datenpunkte ferner umfasst, dass die Differenz zwischen Losbrechkraft und Setzkraft bestimmt wird und dass die Korrektur zumindest teilweise darin besteht, den Pressweg für den zweiten Teilschritt des Verpressens des Pressverbunds um einen in einer Datentabelle hinterlegten, dieser Kraftdifferenz zugeordneten Weg zu reduzieren. Dieses Vorgehen setzt voraus, dass zuvor in einer Versuchsserie die von den Eigenschaften der Presse abhängige elastische Antwort der Presse auf eine partielle Entlastung untersucht wird, um die Datentabelle zu erzeugen. Sein Vorteil besteht darin, dass so eine relativ hohe Präzision erreicht werden kann.

Eine zweite konkrete Möglichkeit besteht darin, dass die Auswertung der Datenpunkte ferner umfasst, dass die Positionswerte der ersten beiden Punkte des Kraft-Weg-Diagramms, an denen die Setzkraft (S) herrscht, bestimmt werden und dass die Differenz aus dem Positionswert des zweiten Punkts des Kraft-Weg-Diagramms, an dem die Setzkraft herrscht und dem Positionswert des ersten Punkts des Kraft-Weg-Diagramms, an dem die Setzkraft herrscht, ermittelt wird, und dass die Korrektur zumindest teilweise darin besteht,den Pressweg für den zweiten Teilschritt des Verpressens der Bauteile um diese Differenz zu reduzieren. Diese Möglichkeit erlaubt eine unmittelbare Extraktion des Korrekturwertes aus den Datenwerten des aufgenommenen Kraft-Weg-Diagramms, allerdings ist in vielen Fällen eine Interpolation notwendig, die insbesondere dann, wenn die Zahl der Datenpunkte, die zur Beschreibung des Kraftaufbaus bis zum Losbrechen des aufzupressenden Bauteils und der schlagartigen Entspannung nach seinem Losbrechen zur Verfügung stehen, gering ist, die erreichbare Genauigkeit des so bestimmten Korrekturwertes begrenzt.

Das erfindungsgemäße Pressverfahren ist ein Verfahren für Pressprozesse, bei denen die zu verpressenden Bauteile zumindest ein erstes und ein zweites Bauteil umfassen und dass das Pressverfahren ein Pressverfahren zum anschlaglosen Positionieren des ersten Bauteils an einer vorgegebenen Position des zweiten Bauteils ist, wie es insbesondere bei einem Pressprozesses der Fall ist, bei dem ein Pressring auf eine Welle aufgepresst wird, um eine auf die Welle aufgeschobene Hülse mit einem vorgegebenen Axialspiel zu sichern. Diese Art von Pressprozessen unterscheidet sich grundlegend von Pressprozessen, bei denen Teile auf Anschlag oder auf Block miteinander verpresst werden, da bei letzteren die Zielposition durch den Anschlag definiert ist und sich das Erreichen einer so definierten Zielposition einfach durch den Anstieg der wirkenden Kräfte bestimmen lässt. Eine hochgenaue Vorgabe des Presswegs erübrigt sich dann.

Eine erfindungsgemäße Presse zur Durchführung eines erfindungsgemäßen Verfahrens weist ein C-Gestell mit Fußteil, Zwischenteil und Kopfteil, ein am Fußteil angeordnetes Kraftmesssystem, und eine Linearführung, welche eine Pinole führt, die durch einen Motor bewegbar ist, eine Steuerung zur Durchführung eines erfindungsgemässen Verfahrens, die den Motor ansteuert, auf. Auf beiden Seiten des C-Gestells ist jeweils eine Seitenwand angebracht, wobei die eine Seitenwand fest am C-Gestell befestigt ist, während die andere Seitenwand lediglich im Bereich des Fußteils des C-Gestells befestigt und im Bereich von Zwischenteil und Kopfteil lediglich kraftschlüssig verbunden ist. Dabei weist die Presse ferner ein Positionsmesssystem für die Position der Pinole oder eines an dieser angeordneten Pressstempels auf, wo-Kraftmesssystem und das Positionsmesssystem mit einer Steuerung in Signalkommunikation verbringbar sind.

Die Erfindung soll nachfolgend unter Bezugnahme auf Figuren, die Ausführungsbeispiele der Erfindung illustrieren, näher erläutert werden. Es zeigen:

Figur 1        eine Seitenansicht einer Presse zur Durchführung des erfindungsgemäßen Verfahrens,

Figur 2        eine Frontalansicht der Presse aus Figur 1,

Figur 3a-e    Stadien eines beispielhaften Pressprozesses,

Figur 4        eine beispielhafte Kraft-Weg-Kennlinie, wie sie sich aus von der Presse aus Figur 1 aufgenommenen Messdaten eines Pressvorgangs ergibt,

Figur 5:        eine Kraft-Weg-Kennlinie für einen Pressvorgang ohne Kompensation,

Figur 6:        eine Kraft-Weg-Kennlinie für einen Pressvorgang mit einer Todwegkompensation,

Figur 7:        eine Kraft-Weg-Kennlinie für einen Pressvorgang mit einer Todwegkompensation und einer ersten Variante einer zusätzlichen Kompensation einer Änderung der Vorspannung im System, und

Figur 8:        eine Kraft-Weg-Kennlinie für einen Pressvorgang mit einer Todwegkompensation und einer zweiten Variante einer zusätzlichen Kompensation einer Änderung der Vorspannung im System.

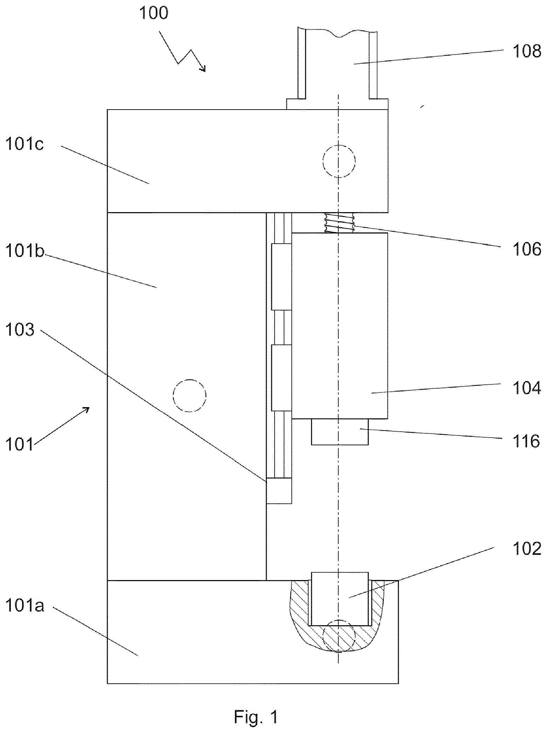

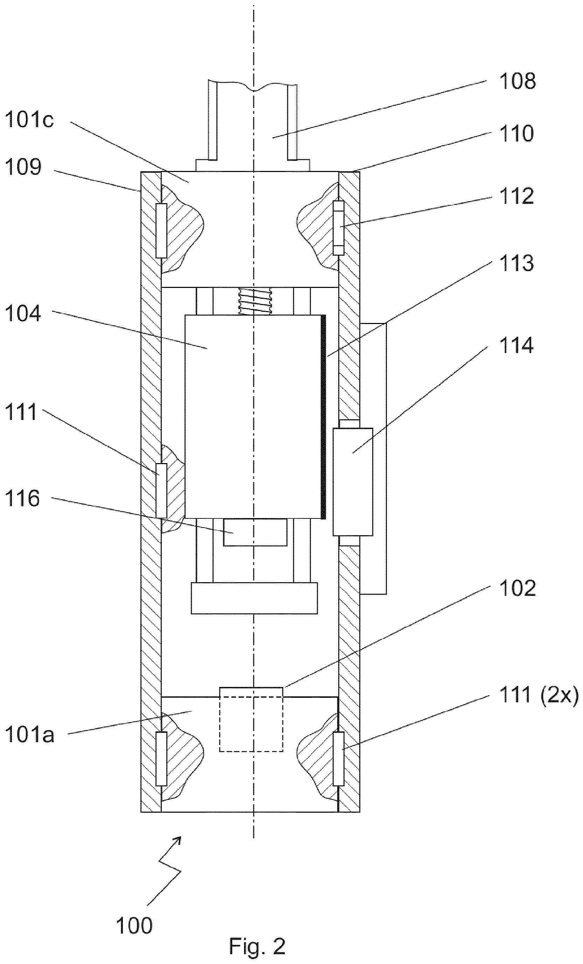

Figuren 1 und 2 zeigen verschiedene Ansichten einer Presse 100 zur Durchführung des erfindungsgemäßen Verfahrens. Zu der Presse 100 gehört eine in den Figuren nicht dargestellte Steuerung, die den Motor ansteuert, die nachfolgend beschriebene, an der Presse angeordnete Sensorik auslesen und auswerten sowie Messwerte der Sensorik und Betriebsparameter, wie z.B. einen gewünschten Pressweg speichern kann, also insbesondere eine CPU und einen Speicher, der auch in der CPU integriert sein kann, enthält. Die Steuerung kann in Form einer in die Presse 100 integrierten Steuerelektronik realisiert werden, sie kann aber auch extern, z.B. als Steuer-PC realisiert werden.

Die Basis der Presse 100 ist ein massives C-Gestell 101, bestehend aus Fußteil 101a, Zwischenteil 101b und Kopfteil 101c, das vorzugsweise aus massivem Werkzeugstahl besteht. Im Fußteil 101a ist eine hochpräzise Kraftmessdose 102, die beispielsweise durch einen handelsüblichen piezoelektrischen Kraftaufnehmer gebildet sein kann, integriert. Ferner ist am Fußteil 101a ein Unterwerkzeug 115 angeordnet, das ebenso wie der Pressstempel 116 von den zu verpressenden Bauteilen abhängig ist und deshalb in Figur 1 und 2 nicht gezeigt ist.

Am Zwischenteil 101b ist eine Linearführung 103 angeschraubt, welche die Pinole 104, also die Pressstempelaufnahme für den von den zu verpressenden Bauteilen abhängigen und daher auswechselbaren Pressstempel 116, exakt über den gesamten Pressweg führt. Durch diese konstruktive Lösung wird über den gesamten Pressbereich höchste Steifigkeit erreicht.

Die Pinole 104 wird durch die nicht dargestellte Spindelmutter der Antriebsspindel 106 bewegt. Im Kopfteil 101c befindet sich das in der Figur nicht sichtbare Axiallager für die Antriebsspindel 106 sowie ein bevorzugt als Servomotor ausgeführter Motor 108, welcher über eine in den Figuren nicht sichtbare Kupplung mit der Antriebsspindel 106 verbunden ist.

Wie man besonders gut in der Darstellung gemäß Figur 2 erkennt, ist auf beiden Seiten des C-Gestells 101 jeweils eine Seitenplatte 109, 110 angebracht. Die in der Darstellung der Figur 2 linke Seitenwand 109 ist mittels Zentrierhülsen 111 fest mit dem C-Gestell 101 verschraubt. Die dadurch erzielte formschlüssige Anbindung der Seitenwand 109 an das C-Gestell verbessert dessen Gesamtsteifigkeit erheblich.

Im Gegensatz dazu ist die in der Darstellung der Figur 2 rechte Seitenwand 110 lediglich im Bereich des Fußteils 101a des C-Gestells 101 mit Zentrierhülsen 111 angeschraubt. Im Bereich von Zwischenteil 101b und Kopfteil 101c ist die Seitenwand 110 jedoch lediglich -in diesem Ausführungsbeispiel durch Kunststoffgleitlager 112- kraftschlüssig verbunden. Als Konsequenz dieser Ausgestaltung kann sich in diesen Bereichen das C-Gestell 101 relativ zur Seitenwand 110 bewegen, und die Seitenwand 110 ist sozusagen schwimmend am C-Gestell 101 gelagert.

Diese spezielle Ausgestaltung der Presse ist die Basis für das in diesem Ausführungsbeispiel verwendete, besonders vorteilhafte Positionsmesssystem, das ein direkt auf der beweglichen Pinole 104 angeordnetes Maßband 113 und einen an der Seitenwand 110 angeordneten Lesekopf 114. Diese Bauteile werden bevorzugt so ausgestaltet, dass eine Auflösung von 0,001 $\mu$m erreicht wird. Mit dem so aufgebauten Positionsmesssystem steht ein Absolutwertmesssystem zur Beschaffung absoluter Weginformationen ohne jegliche Referenzfahrten zur Nullpunktsbestimmung zur Verfügung.

Da der Lesekopf 114 an der schwimmend gelagerten Seitenwand 110 angeordnet ist, werden die kraftabhängigen Systemdeformationen der Presse 100 während des Pressvorgangs durch ihn erfasst und somit durch die Lageregelung automatisch korrigiert.

Da die vorstehend beschriebene Presse 100 einerseits Mittel zur Messung einer aktuellen Position des Pressstempels 116 durch Bestimmung der Position der Pinole 104 in Form von Maßband 113 und Lesekopf 114 und andererseits Mittel zur Messung der aktuell wirkenden Kraft in Gestalt der Kraftmessdose 102 aufweist, kann aus den mittels dieser Mittel aufgenommenen Daten während der Messung eine Kraft-Weg-Kennlinie, also ein Kraft-Weg-Diagramm, ermittelt werden, deren Verlauf weiter unten anhand eines in Figur 4 gezeigten Beispiels, in dem die Kraft auf der Y-Achse und der Weg auf der X-Achse des Kraft-Weg-Diagramms dargestellt ist, erläutert wird.

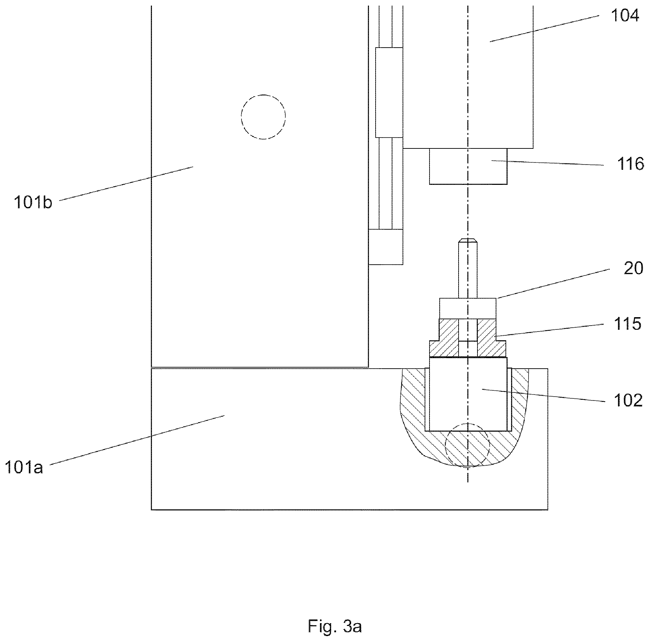

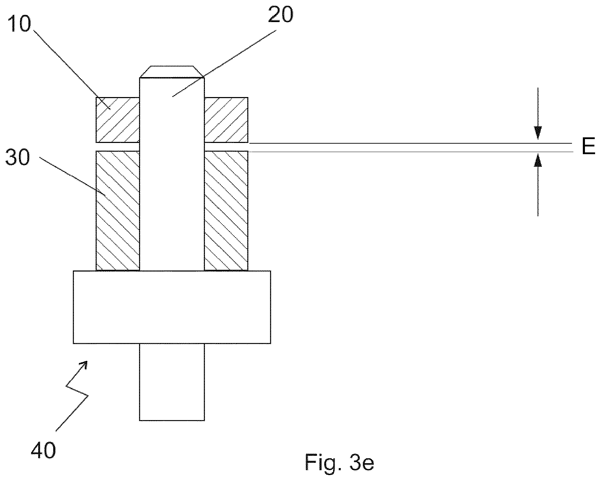

Zunächst wird aber anhand der Figuren 3a bis 3e eine typische Aufgabe illustriert, die mit einer solchen Presse 100 durchgeführt werden kann. Dabei wird das Grundprinzip eines Pressprozesses beschrieben, bei dem ein Pressring 10 auf eine Welle 20 aufgepresst wird, um eine auf die Welle 20 aufgeschobene Hülse 30 mit einem vorgegebenen Axialspiel a zu sichern, also einen Pressverbund so herzustellen, wie er in Figur 3e als Endprodukt gezeigt wird.

Figur 3a zeigt das Einlegen der Welle 20 in das Unterwerkzeug 115 der Presse 100. Dabei ist der Pressstempel 116 hochgefahren, um das Einlegen der Welle 20 zu erleichtern.

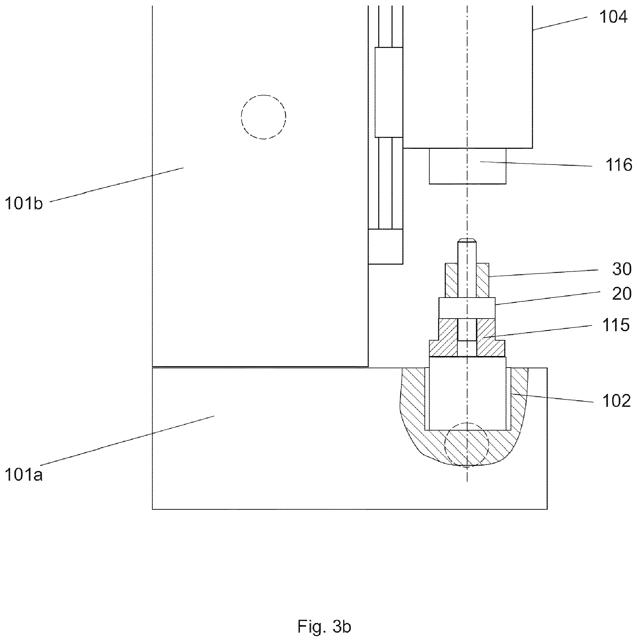

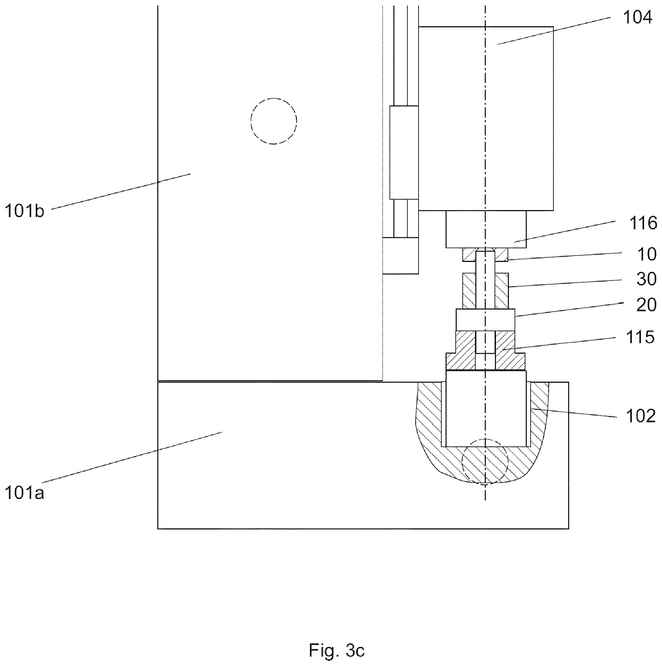

In Figur 3b ist zusätzlich die Hülse 30 auf die Welle 20 aufgeschoben, die mit dem Pressring 10 gesichert werden soll. Dazu wird der Pressring 10 stirnseitig auf die Welle 20 gelegt und der Pressvorgang, der in diesem Beispiel in zwei Teilschritte zerlegt durchgeführt wird, um eine Korrektur für das Zurückfedern der Presse 100 beim Losbrechen des Pressrings 10 zu ermöglichen, gestartet. Zunächst wird der Pressring 10 durch den Pressstempel 116 angetastet, wodurch die die Nullposition des Presswegs, um den die Steuerung den Pressstempel 116 im ersten Teilschritt verfahren soll, zumindest vorläufig definiert wird. Dann beginnt der erste Teilschritt, und der Pressring 10 wird auf eine Vorposition V gedrückt. Der nach diesen Schritten erreichte Zustand ist in Figur 3c dargestellt.

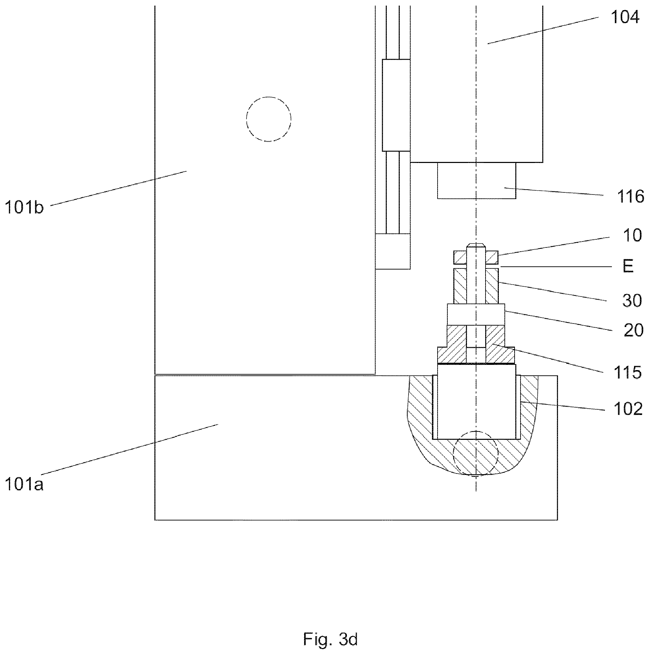

Durch das Ausführen des ersten Teilschritts steht ein Kraft-Weg-Diagramm zur Verfügung, das zur Korrektur des Presswegs in Abhängigkeit von Parametern dieses Pressprozesses genutzt wird. Nun kann das aktuelle Axialspiel der Hülse, durch verschieben auf der Welle ermittelt werden. Diese Axialspielmessung kann entweder durch ein in der Presse integriertes Messmittel oder durch Herausnehmen des Bauteilverbundes ermittelt werden. Die Pinole 104 bzw. der Pressstempel 116 wird dann um den resultierenden "Restpressweg" in mindestens einem weiteren Teilschritt verfahren, an dessen Ende dann auch der Pressstempel 116 zurückgefahren wird. Der nach diesen Schritten erreichte Zustand ist in Figur 3d dargestellt.

Durch Herausnahme der nun verpressten Bauteile erhält man den in Figur 3e gezeigten Pressverbund 40 aus Welle 20, Hülse 30 und Pressring 10 mit wohldefiniertem Axialspiel E.

Der grundsätzliche Verlauf der in Figur 4 beschriebenen Kraft-Weg-Kennlinie ist nicht spezifisch für diesen speziellen Pressvorgang. Der Begriff "Pressring" kann also in der Beschreibung zu "aufzupressendes Bauteil" verallgemeinert werden, während der Begriff "Welle" zu "Bauteil, auf das aufzupressende Bauteil aufgepresst werden soll" verallgemeinerbar ist.

Wie in Figur 4 angedeutet, lässt sich der Pressprozess in fünf Phasen unterteilen. Die Phase 1 beginnt mit dem Antasten des Pressrings 10 mit dem in die Pinole 104 eingesetzten Pressstempel 116. Ab diesem Zeitpunkt baut sich kontinuierlich eine Kraft auf, die zur Deformation sämtlicher im Antriebsstrang befindlicher Bauteile führt. Dies sind einerseits die systembedingten Bauteile der Presse 100, also Spindel 106, Axiallager, Motorkupplung, Kraftmessdose 102 und C-Gestell 101 und andererseits die miteinander zu verpressenden Bauteile. In dieser Phase wird der Weg s1 vom Pressstempel -und damit auch von der Pinole 104- zurückgelegt. Im Pressverbund 40 aus Pressring 10 und Welle 20 bzw. aufzupressendem Bauteil und Bauteil, auf das das aufzupressende Bauteil aufgepresst werden soll, findet hingegen noch keine Bewegung statt, weil die durch die Presse 100 aufgebrachten Kräfte noch nicht ausreichen, um die Haltekräfte des Pressrings 10 auf der Welle 20, insbesondere seine Haftreibung, zu überwinden.

Die Phase 2 beginnt, sobald die Kraft, mit der die Presse 100 arbeitet, ausreicht, um diese Haltekräfte zu überwinden. Ist diese als Losbrechkraft L bezeichnete Kraft erreicht, kommt es zum "Losbrechen" des Pressrings 10, was bedeutet, dass sich dieser in Bewegung setzt und somit nicht mehr seine Haftreibung, sondern seine Gleitreibung der Bewegung entgegen wirkt. Als Konsequenz kommt es zu einem schlagartigen Kraftabfall im Pressverbund, bei dem der Pressring 10 zeitweilig dem Pressstempel 116 bzw. der diesen bewegenden Pinole 104 vorauseilt. Der Pressstempel 116 legt in dieser Phase den Weg s2 zurück.

Die Phase 3 beginnt damit, dass der Pressstempel 116 den Pressring 10 wieder erreicht. Die wirkende Kraft beginnt anzusteigen, bis eine konstante Gleitgeschwindigkeit erreicht ist, bei der die wirkende Kraft mit der Gleitreibungskraft im Gleichgewicht befindet. In der Phase 3 wird die Strecke s3 zurückgelegt.

Phase 4 beginnt damit, dass die Steuerung der Presse 100 den Pressstempel 116 bzw. die Pinole 104 abbremst, indem sie den als Servomotor ausgeführten Motor 108 so ansteuert, dass die Geschwindigkeit des Pressvorgangs auf Null reduziert wird. Dementsprechend verringert sich die Geschwindigkeit des Pressstempels 116 bzw. der Pinole 104, bis er zum Stillstand kommt. Der Pressring 10 befindet sich nun an seiner Endposition und ist durch Haltekräfte, insbesondere Haftreibungskräfte, mit der Welle 20 verbunden. Es wirkt aber an dieser Position noch eine Kraft auf den 40 Pressverbund, nämlich die Setzkraft S.

Es ist nun noch notwendig, den Pressstempel 116 wieder zurückzuziehen, um den Pressverbund 40 aus Pressring 10 und Welle 20 mit Hülse 30 freizugeben. Dies geschieht in Phase 5. Die Pinole 104 mit daran angeordnetem Pressstempel 116 ändert ihre Vorschubrichtung und beginnt sich vom Pressring zu 10 entfernen. Die bei Beginn des Pressvorgangs aufgebaute elastische Deformation wird wieder abgebaut, bis schließlich der Pressstempel 116 vom Pressring 10 abgehoben ist und keine Kraft mehr ausübt. Insbesondere ist an dieser Stelle darauf hinzuweisen, dass die Form der Kraft-Weg-Kennlinie während der Phase 1 und der Phase 5 identisch ist, solange lediglich eine elastische Deformation aufgetreten ist.

Anhand des in Figur 4 dargestellten prinzipiellen Verlaufs des Kraft-Weg-Diagramms kann man sich zunächst einmal allgemein vergegenwärtigen, wie dieses von Bauteiltoleranzen und Umgebungsparametern abhängt.

Ausgangspunkt dieser Überlegungen ist die Tatsache, dass die Wege im Kraft-Weg-Diagramm stets Wege sind, die die Pinole 104 mit dem in sie eingesetzten Stempel 116 zurücklegt. Diese Wege entsprechen nicht unmittelbar den Wegen, die der Pressring 10 auf der Welle 20 zurücklegt, und genau dies ist eine wichtige Ursache für die fehlende Positioniergenauigkeit herkömmlicher Verfahren.

Während der Phase 1 bewegt sich nämlich nur der Pressstempel 116, nicht aber der Pressring 10. Dementsprechend muss der als Regelgröße vorgegebene Verfahrweg der Pinole 104 korrigiert werden. Durch einen festen, für alle Pressvorgänge einer Bauteilserie identischen Korrekturwert lässt sich dies als Konsequenz von Bauteiltoleranzen nicht präzise erreichen. Es ist unmittelbar einsichtig, dass z.B. ein Pressring 10 mit Übermaß auf einer Welle 20 mit Untermaß eine signifikant geringere Losbrechkraft L benötigen wird als ein Pressring 10 mit Untermaßauf einer Welle 20 mit Übermaß.

Das Problem lässt sich mit hohem Aufwand reduzieren, indem die Bauteile vorsortiert werden, so dass Pressringe 10 mit Untermaß und Wellen 20 mit entsprechendem Untermaß einander zugeordnet werden. Da die entsprechenden Wegstrecken jedoch aus dem Kraft-Weg-Diagramm gut ermittelbar sind, bietet sich die erfindungsgemäße Aufnahme und Auswertung dieser Daten während der einzelnen individuellen Pressvorgänge an. Dies gilt umso mehr, als neben den Bauteiltoleranzen auch andere Größen, wie Umgebungstemperatur, Schmierung und Pressgeschwindigkeit eine Rolle spielen.

Aber auch nach dieser Korrektur verbleiben noch Abweichungen zwischen der Bewegung der Pinole 104 bzw. eines darin eingesetzten Pressstempels 116 und der Bewegung des Pressrings 10 auf der Welle. Diese äußern sich darin, dass man in der Praxis feststellt, dass die Strecke s6, die dem Kraft-Weg-Diagramm zu entnehmen ist und welche theoretisch den Abstand zwischen dem Punkt, an dem der Pressring 10 losbricht und dem Punkt, an dem er sich wieder setzt angibt, spürbar von dem Weg abweicht, den der Pressring 10 auf der Welle 20 zurückgelegt hat. Die Erklärung hierfür ist die Folgende:

Während die Losbrechkraft L von der Presse 100 aufgebaut wird, kommt es zu einer Deformation der Presse 100. Da die Gleitreibungskräfte, die in der Phase 3 überwunden werden müssen, deutlich geringer sind als die Losbrechkraft L, kommt es mit dem Losbrechen des Pressrings 10 auch zu einer partiellen Entspannung der Presse 100, die zu einer Relativbewegung führt, welche der schwimmend gelagerte Lesekopf 114 nicht erfassen kann, so dass der verbleibende Pressweg überschätzt wird. Um diesen Fehler zu kompensieren, kann aus dem Kraft-Weg-Diagramm die in Figur 4 als Wegstrecke s7 gekennzeichnete Strecke ermittelt werden, indem die Setzkraft S bestimmt wird und entweder aus den Punkten des Kraft-Weg-Diagramms während der Phasen 1 und 2 der Bewegung, an denen die Setzkraft erreicht wird, direkt bestimmt wird oder indem die Differenz aus Losbrechkraft L und Setzkraft S bestimmt wird und benutzt wird, um eine in einer Datentabelle hinterlegte Korrekturstrecke auszuwählen.

Um diese Korrekturen im laufenden Pressvorgang durchführen zu können, wird der Pressvorgang in zwei Teilschritte unterteilt. Damit ist die Extraktion der relevanten Parameter aus der Kraft-Weg-Kennlinie des ersten Teilschritts möglich und die Korrektur kann dann im zweiten Teilschritt vorgenommen werden.

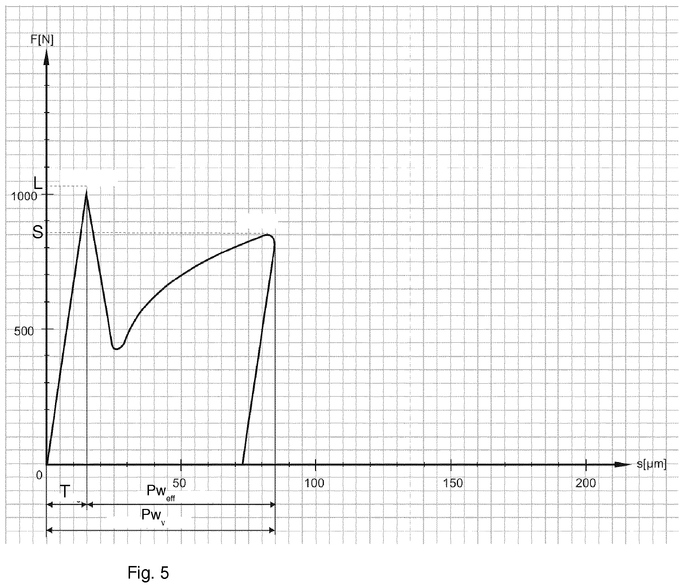

Nachfolgend werden nun unter Bezugnahme auf die Kraft-Weg-Kennlinien gemäß den Figuren 5 bis 8 die Abläufe beispielhafter Pressvorgänge unter Berücksichtigung unterschiedlicher Korrekturen detailliert geschildert, um zu einem klareren Verständnis der Erfindung beizutragen.

Zunächst erfolgt die Beschreibung eines Pressvorgangs mit der Kraft-Weg-Kennlinie gemäß Figur 5. Bei dem durch diesen Pressvorgang realisierten Verpressen zweier Bauteile soll eine Verschiebung der Bauteile zueinander von 80 $\mu$m erreicht werden. Es wird dem Pressstempel eine Wegvorgabe (vorgegebener Pressweg $PW_{vor}$) von 80 $\mu$m vorgegeben.

Bei der Ausführung des Pressvorgangs ergibt sich dann der folgende Ablauf: Der Stempel triff auf den Pressring auf und versucht den Pressring zu verschieben. Hierbei baut sich kontinuierlich eine Kraft, bis zum Erreichen der Losbrechkraft L, auf. Während des Kraftaufbau wird eine Wegstrecke zurückgelegt, welche innerhalb der Presse als auch im Bauteilverbund, folgend Presssystem bezeichnet, eine elastische Deformation bewirkt. Diese elastische Deformation wird nicht in eine Bewegung des Pressrings umgesetzt. Diese Wegstrecke wird als Todweg T bezeichnet.

Nach dem Losbrechen des Pressrings kommt es zu einem schlagartigen Abfallen der Presskraft. Der Pressring hat die Haftreibung überwunden und erfährt während dem Verschieben die Kraft der Gleitreibung.

Der Pressstempel fährt an die vorgegebene Position, welche dem vorgegebenen Pressweg von 80 $\mu$m entspricht. Nach Erreichen der Endposition fährt der Stempel zurück. Hierbei wird die Presse als auch der Bauteileverbund kontinuierlich entlastet. Die Kennlinie während der Entlastung weist die identische Steigung wie beim Kraftaufbau auf.

Der soeben im Detail beschriebene Pressvorgang führt in der Praxis zu folgendem Ergebnis: Die Wegvorgabe (der vorgegebene Pressweg $PW_{vor}$) betrug: 80pm. Der Todweg T betrug 15pm. Der von der Steuerung berechnete und angesteuerte Pressweg war 80pm, der effektive, am Bauteil bestimmte effektive Pressweg $PW_{eff}$ war jedoch nur 70 $\mu$m. Da die effektive Wegstrecke der Bauteilverschiebung 70 $\mu$m beträgt, wurde bei diesem Pressverfahren die Zielposition um 10 $\mu$m nicht erreicht. Der effektive Pressweg $PW_{eff}$ ist um 10 $\mu$m zu gering.

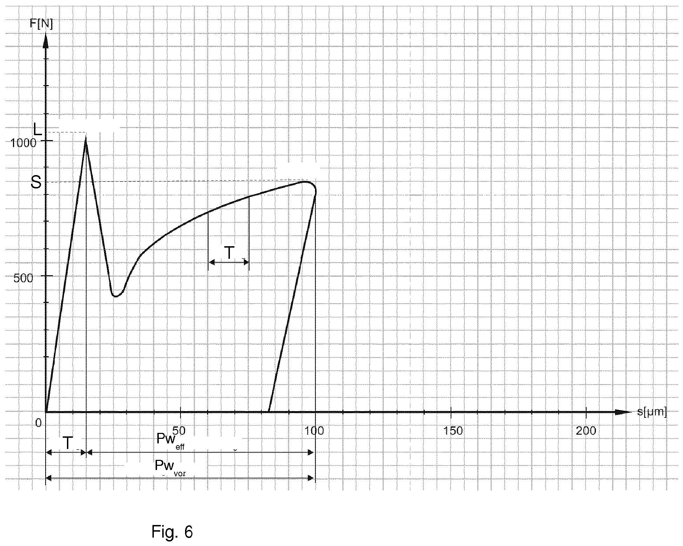

Als nächstes erfolgt die Beschreibung eines Pressvorgangs mit der Kraft-Weg-Kennlinie gemäß Figur 6, bei dem eine Todwegkompensation berücksichtigt wird. Erneut soll bei dem Verpressen zweier Bauteile eine Verschiebung der Bauteile zueinander von 80 $\mu$m erreicht werden. Es wird dem Pressstempel aber eine Wegvorgabe (ein vorgegebener Pressweg $PW_{vor}$) vorgegeben, der neben der gewünschten Verschiebung der Bauteile von 80 $\mu$m hier aber zusätzlich auch noch eine Wegstrecke, welche dem Todweg T entspricht, berücksichtigt.

Der Ablauf entspricht im Wesentlichen dem im Zusammenhang mit Figur 5 beschriebenen Ablauf. Nach dem Losbrechen des Pressrings kommt es zu einem schlagartigen Abfallen der Presskraft. Dieser Kraftabfall wird von der Pressensteuerung erkannt und die Wegstrecke, die dem Todweg T entspricht, berechnet. Dieser Todweg T wird durch die Losbrechkraft und dem Ursprung der Kraft-Weg-Kennlinie beschrieben. Dieser Todweg T wird während des noch andauernden Pressvorgang einmal hinzuaddiert.

Der soeben im Detail beschriebene Pressvorgang führt in der Praxis zu folgendem Ergebnis: Die Wegvorgabe für Pressstempel war 80pm. Der Todweg war 15pm, was die Pressensteuerung erkannt und berücksichtigt hat. Damit war der von der Steuerung vorgegebene Pressweg $PW_{vor}$ = 80pm + Todweg T (15 pm) = 95 $\mu$m. In der Praxis ergibt sich damit für den am Bauteil gemessenen effektiven Pressweg $PW_{eff}$ ein Wert von 85 $\mu$m. In der Beurteilung ergibt sich daraus, dass die effektive Wegstrecke der Bauteilverschiebung 85 pm, dass bei dem Pressverfahren mit dynamischer Todwegkompensation zwar eine Verbesserung der Abweichung im Vergleich zum Pressvorgang ohne Todwertkompensation erreicht wurde, aber die Zielposition um 5 $\mu$m überschritten. Der effektive Pressweg $PW_{eff}$ ist um 5 $\mu$m zu weit.

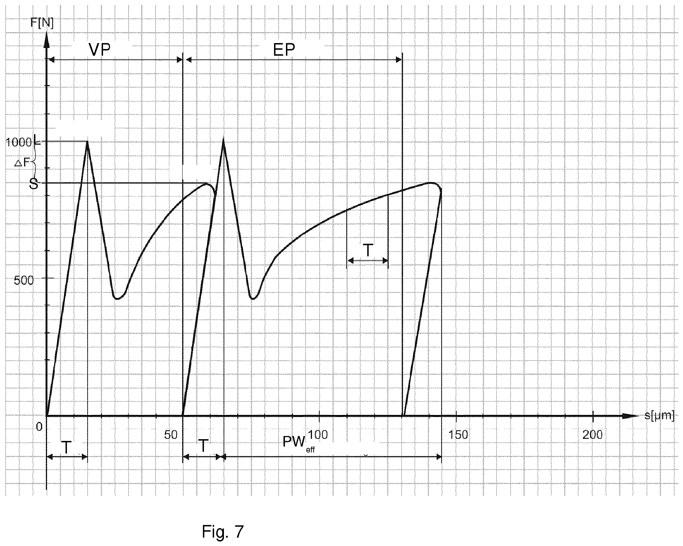

Als nächstes erfolgt die Beschreibung eines Pressvorgangs mit der Kraft-Weg-Kennlinie gemäß Figur 7, bei dem eine Todwegkompensation und eine erste Variante einer zusätzlichen Kompensation einer Änderung der Vorspannung im System berücksichtigt werden.

Erneut soll bei dem Verpressen zweier Bauteile eine Verschiebung der Bauteile zueinander von 80 $\mu$m erreicht werden.

Hierbei wird der Pressvorgang zwei Teilschritte, nämlich in eine Vorpressung VP und eine Endpressung EP, unterteilt. Anhand der Vorpressung VP werden aus der erzeugten Kraft-Weg-Kennlinie die Kennwerte "Losbrechkraft" L und "Setzkraft" S ermittelt. Aus der Losbrechkraft L und der Setzkraft S wird die Differenzkraft $\Delta F$ berechnet.

$$\Delta F = \text{Losbrechkraft L} - \text{Setzkraft S.}$$

Aus einer Lookup-Tabelle wird zu der berechneten Differenzkraft $\Delta F$ ein zugeordneter Korrekturwert ermittelt.

**Beispiel für Lookup-Tabelle:**

| Differenzkraft $\Delta F$ [N] | Kraftabhängiger Korrekturwert [$\mu$m] | |
|---|---|---|
| $\geq$ -175 < -150 | -6 | |
| $\geq$ -150 < -125 | -5 | |
| $\geq$ -125 < -100 | -4 | |
| $\geq$ -100 < -75 | -3 | Setzkraft größer Losbrechkraft |
| $\geq$ -75 < -50 | -2 | |
| $\geq$ -50 < -25 | -1 | |
| $\geq$ -25 < 0 | -0,5 | |
| $\geq$ 0 < 25 | 0,5 | |
| $\geq$ 25 < 50 | 1 | |
| $\geq$ 50 < 75 | 2 | |
| $\geq$ 75 < 100 | 3 | Setzkraft kleiner Losbrechkraft |
| $\geq$ 100 < 125 | 4 | |
| $\geq$ 125 < 150 | 5 | |
| $\geq$ 150 < 175 | 6 | |

In einem zweiten Pressschritt (Endpressen EP), bei dem die Bauteile gezielt um 80 $\mu$m zueinander verschoben werden sollen, wird zur Todwegkompensation zusätzlich die Kompensation mit einem kraftabhängigen Korrekturwert, welcher durch die Differenzkraft $\Delta F$ von Losbrechkraft L und Setzkraft S ermittelt wurde, angewendet.

Die Differenzkraft $\Delta F$ (Losbrechkraft L - Setzkraft S) ist die Ursache für eine Änderung der Vorspannung im Presssystem. Ist die Setzkraft S kleiner als die Losbrechkraft L bewirkt dies ein Rückfedern des Presssystems. Ist die Setzkraft S größer als die Losbrechkraft L, wird die Vorspannung im Presssystem erhöht. Dies bewirkt z.B. eine größere Aufbiegung des C-Gestells.

Die Wegvorgabe des Stempels beinhaltet nun:

- den gewünschten Pressweg in Höhe von 80pm
- die dynamische Todwegkompensation
- die Berücksichtigung des kraftabhängigen Korrekturwertes.

Damit wird im Ergebnis erreicht, dass aus der Wegvorgabe für Pressstempel: 80pm und dem Todweg T: 15pm unter Berücksichtigung des kraftabhängigen Korrekturwert: 5pm der von der Steuerung berechnete vorgebene Pressweg $PW_{vor}$ = 80pm + 15pm (Todweg T) - 5 $\mu$m (Korrekturwert) = 90 $\mu$m beträgt, was dann einem real am Bauteil messbaren effektiven Pressweg $PW_{eff}$ = 80 $\mu$m entspricht. In der Beurteilung ergibt sich, dass da die effektive Wegstrecke der Bauteilverschiebung 80 µm beträgt, bei dem Pressverfahren mit dynamischer Todwegkompensation sowie dem kraftabhängigen Korrekturwert die Zielposition exakt erreicht wurde.

Angemerkt sei, dass die Werte für die Lookup-Tabelle können entweder durch graphische Auswertung von Kraft-Weg-Kennlinien, oder durch empirische Werte, welche bei Testpressungen erreicht wurden, bestimmt werden können.

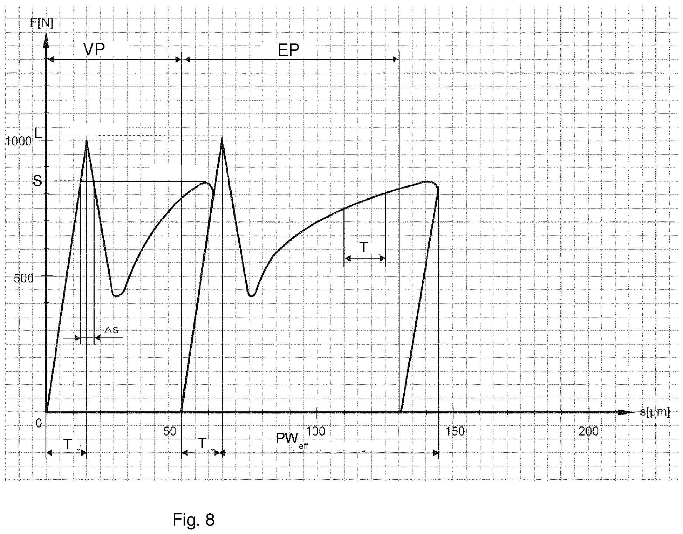

Abschließend erfolgt noch die Beschreibung eines Pressvorgangs mit der Kraft-Weg-Kennlinie gemäß Figur 8, bei dem eine Todwegkompensation und eine zweite Variante einer zusätzlichen Kompensation einer Änderung der Vorspannung im System berücksichtigt werden.

Auch hier soll bei dem Verpressen zweier Bauteile eine Verschiebung der Bauteile zueinander von 80 µm erreicht werden, wobei der Pressvorgang zwei Teilschritte, nämlich in eine Vorpressung VP und eine Endpressung EP, unterteilt wird.

Anhand einer Vorpressung VP wird aus der erzeugten Kraft-Weg-Kennlinie der Kennwert "Setzkraft" S ermittelt. Die Kraftkennlinie wird in der ansteigenden und absteigenden Kraftflanke um die Losbrechkraft L in der Form analysiert, dass die entsprechenden Weginformationen, welche dem Kraftniveau der Setzkraft S entspricht, ermittelt werden. Aus diesen Weginformationen wird der Differenzweg $\Delta s$ berechnet.

Dieser Differenzweg entspricht dem Teilentspannen (Rückfedern) des Presssystems, sowie dem Bauteilverbund, bedingt durch unterschiedliche Kraftniveaus beim Losbrechen bzw. beim Setzen des Bauteils.

In einem zweiten Pressschritt (Endpressen EP), bei dem die Bauteile gezielt um 80 µm zueinander verschoben werden sollen, wird zur Todwegkompensation zusätzlich die Kompensation mit dem Differenzweg $\Delta s$, welcher durch ein Teilentspannen des Presssystems hervorgerufen wird, angewendet.

Die Wegvorgabe des Stempels beinhaltet den gewünschten Pressweg in Höhe von 80pm, die dynamische Todwegkompensation sowie die Kompensation des Differenzwegs $\Delta s$.

Auch mit dieser Variante des Verfahrens wird im Ergebnis erreicht, dass aus der Wegvorgabe für Pressstempel: 80µm und dem Todweg T: 15pm unter Berücksichtigung des kraftabhängigen Korrekturwert: 5pm der von der Steuerung berechnete vorgegebene Pressweg $PW_{vor}$ = 80pm + 15pm (Todweg) - 5 µm (Korrekturwert) = 90 µm beträgt, was dann zu einem real am Bauteil messbaren effektiven Pressweg $PW_{eff}$ : 80 µm führt. In der Beurteilung ergibt sich, dass da die effektive Wegstrecke der Bauteilverschiebung 80 µm beträgt, bei dem Pressverfahren mit dynamischer Todwegkompensation sowie dem kraftabhängigen Korrekturwert die Zielposition exakt erreicht wurde.

Anzumerken ist, dass bei diesem Verfahren keine Lookup-Tabelle erstellt werden muss. Der Differenzweg $\Delta s$ wird aus der Kraft-Weg-Kennlinie der Vorpressung ermittelt und bei der Endpressung automatisch angewendet.

Bezugszeichenliste

| | |
|---|---|
| 10 | Pressring |
| 20 | Welle |
| 30 | Hülse |
| 40 | Pressverbund |
| 100 | Presse |
| 101 | C-Gestell |
| 101a | Fußteil |
| 101b | Zwischenteil |
| 101c | Kopfteil |
| 102 | Kraftmessdose |
| 103 | Linearführung |
| 104 | Pinole |
| 106 | Antriebsspindel |
| 108 | Motor |
| 109,110 | Seitenplatten |
| 111 | Zentrierhülse |
| 112 | Kunststoffgleitlager |
| 113 | Maßband |
| 114 | Lesekopf |
| 115 | Unterwerkzeug |
| 116 | Pressstempel |

s1-s7    Strecken

| Δs | Differenzweg |
| ΔF | Differenzkraft |
| L | Losbrechkraft |
| S | Setzkraft |
| E | Axialspiel |
| V | Vorposition |
| T | Todweg |
| $PW_{vor}$ | vorgegebener Pressweg |
| $PW_{eff}$ | effektiver Pressweg |
| VP | Vorpressung |
| EP | Endpressung |

**Patentansprüche**

1. Pressverfahren für eine Presse (100) mit einem Unterwerkzeug (111) und einem durch einen Motor (108) angetriebenen Pressstempel oder einer durch einen Motor (108) angetriebenen Pinole (104), wobei die Presse (100) ferner die ein Positionsmesssystem für die direkte oder indirekte Messung der Position des Pressstempels oder der Pinole (104) und ein Kraftmesssystem für die Messung der von der Presse (100) ausgeübten Kraft aufweist und wobei das Positionsmesssystem und das Kraftmesssystem in Signalkommunikation mit einer Steuerelektronik zur Ansteuerung der Presse (100) stehen mit den Schritten

   - Einsetzen der zu verpressenden Bauteile in das Unterwerkzeug (111),
   - Verpressen der zu verpressenden Bauteile, und
   - Entnehmen der verpressten Bauteile,

   bei dem

   - während des Verpressens der Bauteile die Aufnahme von Datenpunkten für ein Kraft-Weg-Diagramm für die jeweils eingesetzten Bauteile mittels des Positionsmessystems und des Kraftmesssystems erfolgt,
   - noch während des Verpressens der Bauteile, für die die Datenpunkte aufgenommen wurden, eine Auswertung der Datenpunkte erfolgt, um mindestens einen Korrekturwert für den Pressweg zu bestimmen, und
   - noch während des Verpressens der Bauteile, für die die Datenpunkte aufgenommen wurden, eine Korrektur des Presswegs für diese Bauteile unter Verwendung mindestens eines so erhaltenen Korrekturwerts erfolgt, wobei die zu verpressenden Bauteile zumindest ein erstes und ein zweites Bauteil umfassen,

   **dadurch gekennzeichnet, dass** das Pressverfahren ein Pressverfahren zum anschlaglosen Positionieren des ersten Bauteils an einer vorgegebenen Position des zweiten Bauteils ist, und dass die Auswertung der Datenpunkte für das Kraft-Weg-Diagramm eine zumindest näherungsweise Ermittlung der Position, an der die Losbrechkraft (L) erreicht wurde, umfasst.

2. Pressverfahren nach Anspruch 1,
   **dadurch gekennzeichnet, dass** die Ermittlung der zumindest näherungsweise ermittelten Position, an der die Losbrechkraft (L) erreicht wurde, durch Auswertung des Kraftanstiegs zwischen jeweils benachbarten Messpunkten und/oder durch Bestimmung des Erreichens eines Maximums der Kraft erfolgt.

3. Pressverfahren nach Anspruch 1 oder 2,
   **dadurch gekennzeichnet, dass** die Korrektur zumindest teilweise darin besteht, dass die Position, an der die Losbrechkraft (L) erreicht wurde, als Anfangsposition des Presswegs verwendet wird.

4. Pressverfahren nach Anspruch 1 oder 2,
   **dadurch gekennzeichnet, dass** die Korrektur zumindest teilweise darin besteht, dass die Wegstrecke zwischen der Position, bei der der Pressstempel eines der Bauteile angetastet hat und der Position, an der die Losbrechkraft (L) erreicht wurde, zum Pressweg für den laufenden Pressvorgang hinzugefügt wird.

5. Pressverfahren nach einem vorstehenden Anspruch,
   **dadurch gekennzeichnet, dass** das Verpressen der Bauteile in mindestens zwei Teilschritten erfolgt.

**6.** Pressverfahren nach Anspruch 5,
**dadurch gekennzeichnet, dass** die Auswertung der Datenpunkte umfasst, dass nach dem Ende des ersten Teilschritts die Setzkraft (S) zumindest näherungsweise bestimmt wird.

**7.** Pressverfahren nach Anspruch 6,
**dadurch gekennzeichnet, dass** die Auswertung der Datenpunkte ferner umfasst, dass die Differenz zwischen Losbrechkraft (L) und Setzkraft (S) bestimmt wird und dass die Korrektur zumindest teilweise darin besteht, den Pressweg für den zweiten Teilschritt des Verpressens des Pressverbunds um einen in einer Datentabelle hinterlegten, dieser Kraftdifferenz zugeordneten Weg zu reduzieren.

**8.** Pressverfahren nach Anspruch 6,
**dadurch gekennzeichnet,**

- **dass** die Auswertung der Datenpunkte ferner umfasst, dass die Positionswerte der ersten beiden Punkte des Kraft-Weg-Diagramms, an denen die Setzkraft (S) herrscht, bestimmt werden und dass die Differenz aus dem Positionswert des zweiten Punkts des Kraft-Weg-Diagramms, an dem die Setzkraft herrscht und dem Positionswert des ersten Punkts des Kraft-Weg-Diagramms, an dem die Setzkraft (S) herrscht, ermittelt wird, und
- **dass** die Korrektur zumindest teilweise darin besteht, den Pressweg für den zweiten Teilschritt des Verpressens der Bauteile um diese Differenz zu reduzieren.

**9.** Presse (100) zur Durchführung eines Verfahrens nach einem der Ansprüche 1 bis 8 mit einem C-Gestell (101) mit Fußteil (101a), Zwischenteil (101b) und Kopfteil (101c), einer am Fußteil (101a) angeordneten Kraftmesssystem, einer Linearführung (103), welche eine Pinole (104) führt, die durch einen Motor (108) bewegbar ist, eine Steuerung, die den Motor (29) ansteuert, wobei auf beiden Seiten des C-Gestells (101) jeweils eine Seitenwand (109, 110) angebracht ist, wobei die eine Seitenwand (109) fest am C-Gestell (101) befestigt ist, während die andere Seitenwand (110) lediglich im Bereich des Fußteils (101a) des C-Gestells (101) befestigt und im Bereich von Zwischenteil (101b) und Kopfteil (101c) lediglich kraftschlüssig verbunden ist, wobei die Presse ferner ein Positionsmesssystem für die Position der Pinole (104) oder eines an dieser angeordneten Pressstempels aufweist, wobei zumindest das Kraftmesssystem und das Positionsmesssystem mit der Steuerung in Signalkommunikation verbringbar sind, und wobei die Steuerung zur Durchführung eines Verfahrens nach einem der Ansprüche 1 bis 8 geeignet ist.

**Claims**

**1.** Pressing method for a press (100) having a lower die (111) and a press ram, driven by a motor (108), or a sleeve (104), driven by a motor (108), wherein the press (100) further comprises a position measurement system for the direct or indirect measuring of the position of the press ram or of the sleeve (104), and a force measurement system for measuring the force exerted by the press (100) and wherein the position measurement system and the force measurement system are in signal communication with control electronics for controlling the press (100), having the steps

- insertion of the components intended for pressing into the lower die (111),
- pressing the components intended for pressing, and
- removing the pressed components,

during which

- while the pressing is being carried out, data points are recorded for a force path diagram for each inserted component by means of the position measurement system and the force measurement system,
- still while the pressing of the components, for which the data points are recorded, is being carried out, an evaluation of the data points is carried out in order to determine at least one correction value for the pressing path, and
- still while the pressing of the components, for which the data points are recorded, is being carried out, a correction of the pressing path for the respective component is carried out using at least one of the correction values obtained in this manner, wherein the components intended for pressing include at least a first and a second component, **characterized in that**

the pressing method is a method for the free positioning of the first component at a specified position of the second component, and **in that** the evaluation of the data points for the force path diagram comprises an at least approximate determination of the position at which the breakaway force (L) was reached.

2. Pressing method in accordance with claim 1,
   **characterized in that** the determination of the at least approximately determined position at which the breakaway force (L) was reached is carried out by evaluating the increase in force between the respectively adjacent measurement points and/or by determining that a maximum of the force has been reached.

3. Pressing method in accordance with claim 1 or 2,
   **characterized in that** the correction at least partially comprises using the position at which the breakaway force (L) was reached as a starting position of the pressing path.

4. Pressing method in accordance with claim 1 or 2,
   **characterized in that** the correction at least partially comprises adding the distance between the position at which the press ram contacts one of the components and the position at which the breakaway force (L) was reached to the pressing path for the ongoing pressing operation.

5. Pressing method in accordance with any of the preceding claims,
   **characterized in that** the pressing of the components is carried out at in at least two sub-steps.

6. Pressing method in accordance with claim 5,
   **characterized in that** the evaluation of the data points includes at least approximately determining the setting force (S) after the end of the first sub-step.

7. Pressing method in accordance with claim 6,
   **characterized in that** the evaluation of the data points further includes determining the difference between the breakaway force (L) and the setting force (S) and **in that** the correction at least partially comprises reducing the pressing path for the second sub-step of the pressing of the press fitting by a distance provided in a data table that relates to this difference in force.

8. Pressing method in accordance with claim 6,
   **characterized in,**

   - **that** the evaluation of the data points further comprises determining the position values of the first two points of the force path diagram at which the setting force (S) arises and in that the difference from the position value of the second point of the force path diagram at which the setting force (S) arises and the position value of the first point of the force path diagram at which the setting force (S) arises is determined, and
   - **that** the correction at least partially comprises reducing the pressing path for the second sub-step of the pressing of the components by this difference.

9. Press (100) for carrying out a method in accordance with any of claims 1 to 8, having a C-frame (101) with a bottom part (101a), an intermediate part (101b) and a top part (101c), a force measurement system arranged on the bottom part (101a), a linear guide (103), which guides a sleeve (104), which is moveable by means of a motor (108), a control, which controls the motor, whereas a side wall (109, 110) is provided on each of the two sides of the C-frame (101), whereas the one side wall (109) is firmly attached to the C-frame (101), while the other side wall (110) is only attached in the region of the bottom part (101a) of the C-frame (101) and is only non-positively attached in the region of the intermediate part (101b) and the top part (101c), wherein the press further comprises a position measurement system for the position of the sleeve (104) or that of the press ram arranged thereon, whereas at least the force measurement system and the position measurement system can be brought into signal communication with the control, and wherein the control is suitable for carrying out a method according to any of claims 1 to 8.


**Revendications**

1. Procédé de pressage pour une presse (100) comportant un outil inférieur (111) et un poinçon de presse entrainé par un moteur (108) ou un porte poinçon (104) entrainé par un moteur (108),

   - la presse (100) ayant en outre un système de positionnement pour la mesure directe ou indirecte de la position du poinçon de presse ou du porte poinçon (104) et un système de mesure de force pour mesurer la force exercée par la presse (100), et

- le système de mesure de position et le système de mesure de force étant en liaison d'échange de signaux avec une électronique de commande pour commander la presse (100), selon les étapes consistant à :
- placer la pièce à presser dans l'outil inférieur (111),
- presser les pièces à presser, et
- enlever les pièces pressées,

selon lequel

- pendant le pressage des pièces, on saisit des points de données pour un diagramme force/course de la pièce respectivement utilisée, à l'aide du système de mesure de position et du système de mesure de force,
- encore pendant le pressage des pièces, pour lesquelles on saisit des points de données, on exploite les points de données pour déterminer au moins une valeur de correction de la course de presse, et
- pendant le pressage des pièces, pour lesquelles on a saisi des points de données, on corrige la course de presse pour ces pièces en utilisant au moins une valeur de correction ainsi obtenue, les pièces à presser comprenant au moins une première et une seconde pièce,

procédé **caractérisé en ce que**

- le procédé de pressage est un procédé pour positionner, sans butée, la première pièce dans une position prédéfinie de la seconde pièce, et
- l'exploitation des points de données pour le diagramme force/course comprend au moins une détermination approchée de la position à laquelle on a atteint la force d'arrachement (L).

2. Procédé de pressage selon la revendication 1,
**caractérisé en ce que**
la détermination de la position déterminée au moins approximativement, à laquelle on a atteint la force d'arrachement (L), se fait par l'exploitation de la montée de la force entre à chaque fois des points de mesure respectivement voisins et/ou en déterminant le fait d'atteindre un maximum de la force.

3. Procédé de pressage selon la revendication 1 ou 2,
**caractérisé en ce que**
la correction consiste au moins partiellement **en ce que** la position à laquelle on a atteint la force d'arrachement (L) est utilisée comme position initiale de la course de presse.

4. Procédé de pressage selon la revendication 1 ou 2,
**caractérisé en ce que**
la correction consiste au moins partiellement à ajouter à la course de pressage pour l'opération de pressage en cours, le trajet entre la position à laquelle le poinçon de presse a touché l'une des pièces et la position à laquelle on a atteint la force d'arrachement (L).

5. Procédé de pressage selon l'une des revendications précédentes,
**caractérisé en ce que**
le pressage des pièces se fait en au moins deux étapes partielles.

6. Procédé de pressage selon la revendication 5,
**caractérisé en ce que**
l'exploitation des points de données consiste à déterminer après la fin de la première étape partielle, la force de tassement (S) au moins approximativement.

7. Procédé de pressage selon la revendication 6,
**caractérisé en ce que**
l'exploitation des points de données consiste en outre à déterminer la différence entre la force d'arrachement (L) et la force de tassement (S) et **en ce que** la correction consiste au moins en partie à réduire la course de pressage pour la seconde partie d'étape du pressage de la combinaison d'une course associée à cette différence de force enregistrée dans un tableau de données.

**8.** Procédé de pressage selon la revendication 6,
**caractérisé en ce que**
l'exploitation des points de données consiste en outre à déterminer les valeurs de position des deux premiers points du diagramme force/course auquel règne la force de tassement (S), et
en déterminant la différence entre la valeur de positionnement du second point du diagramme force/course auquel règne la force de tassement et la valeur de position du premier point du diagramme force/course auquel règne la force de tassement (S), et

- la correction consiste à réduire au moins partiellement de cette différence, la course de pressage pour la seconde partie d'étape de pressage des pièces.

**9.** Presse pour la mise en œuvre d'un procédé selon l'une des revendications 1 à 8, comprenant un bâti en forme de C (101) ayant une base (101a), une partie intermédiaire (101b) et une tête (101c), un système de mesure de force prévu sur la base (101a), un guidage linéaire (103) qui guide le porte poinçon (104) déplacé par un moteur (108), une commande pour commander le moteur (29),

selon lequel
les deux côtés du bâti en forme de C (101), comportent une paroi latérale (109, 110) respective, l'une des parois latérales (109) étant fixée solidairement au bâti en forme de C (101) alors que l'autre paroi latérale (110) est uniquement fixée dans une zone de la base (101a) du bâti en forme de C (101), et dans la zone de la partie intermédiaire (101b) et de la tête (101c), il y a seulement une liaison par la force,
la presse comportant en outre un système de mesure de position de la position du porte poinçon (104) ou d'un poinçon de presse installé dans celui-ci,
au moins le système de mesure de force et le système de mesure de position pouvant être mis reliés pour l'échange de signaux avec la commande, et
la commande est prévue pour exécuter un procédé selon l'une des revendications 1 à 8.

Fig. 1

Fig. 2

Fig. 3a

104

116

101b

30
20
115

102

101a

Fig. 3b

104

101b

116

10

30

20

115

102

101a

Fig. 3c

Fig. 3d

Fig. 3e

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19705462 A1
- US 5813263 A
- US 6276050 B1